(19) Europäisches Patentamt
European Patent Office
Office européen des brevets

(11) **EP 1 059 824 B1**

(12) **FASCICULE DE BREVET EUROPEEN**

(45) Date de publication et mention de la délivrance du brevet:
**11.03.2009 Bulletin 2009/11**

(51) Int Cl.:
***H04W 4/00*** *(2009.01)*

(21) Numéro de dépôt: **00401544.2**

(22) Date de dépôt: **31.05.2000**

(54) **Procédé d'autorisation d'accès à un réseau cellulaire de radiocommunications à partir d'un téléphone mobile, système de radiocommunications et téléphone simplifié associés**

Verfahren zur Zugriffsautorisierung in einem zellularen Funk-Kommunikationsnetzwerk von einem Mobiltelefon, Funk-Kommunikationsystem und vereinfachtes Telefon dafür

Method for authorising the access to a cellular network of radiocommunications from a mobile telephone, radiocommunications system and associated simplified telephone

(84) Etats contractants désignés:
**AT BE CH CY DE DK ES FI FR GB GR IE IT LI LU MC NL PT SE**

(30) Priorité: **10.06.1999 FR 9907325**

(43) Date de publication de la demande:
**13.12.2000 Bulletin 2000/50**

(73) Titulaire: **Alcatel Lucent**
**75008 Paris (FR)**

(72) Inventeur: **Pinault, Francis**
**92270 BoisöColombes (FR)**

(74) Mandataire: **Korakis-Ménager, Sophie et al**
**Alcatel Lucent**
**Intellectual Property & Standards**
**54, rue La Boétie**
**75008 Paris (FR)**

(56) Documents cités:
**EP-A- 0 367 361          WO-A-98/12891**
**US-A- 5 818 915**

**Description**

La présente invention a pour objets un procédé d'autorisation d'accès à un réseau cellulaire de radiocommunications à partir d'un téléphone mobile simplifié, notamment par le fait qu'il ne comporte pas de lecteur pour recevoir un module d'identification d'abonné, ainsi qu'un système de radiocommunications et un téléphone simplifié pour la mise en oeuvre de ce procédé.

Tous les téléphones mobiles connus à l'heure actuelle ne peuvent fonctionner dans un réseau cellulaire particulier qu'à partir du moment où ils sont équipés d'un module d'identification d'abonné délivré par l'opérateur du réseau ou ses distributeurs, et comprenant des informations sur l'utilisateur. Dans le cas non limitatif du réseau paneuropéen GSM, ce module est plus connu sous le nom de carte SIM (initiales anglo-saxonnes mises pour Subscriber Identification Module). Il se présente sous la forme d'une carte à puce de format ISO standard ou d'une microcarte à puce, insérée dans un lecteur du téléphone mobile. Les données mémorisées dans cette carte SIM permettent au téléphone de s'identifier au niveau du réseau d'abonnement. Lorsque le réseau reconnaît, à l'issue d'une phase dite d'inscription ou de rattachement au réseau, les données mémorisées dans cette carte, l'utilisateur est, d'une part, autorisé à utiliser le réseau, et notamment à effectuer des appels sortants, et peut, d'autre part, recevoir des appels acheminés par le réseau.

Un avantage procuré par l'existence de la carte SIM, ou plus généralement, du module d'identification d'abonné, est de permettre au détenteur de ce module d'accéder au réseau d'abonnement à partir de n'importe quel terminal mobile apte à recevoir un tel module.

Pour éviter cependant qu'un utilisateur ne se serve du téléphone mobile sans autorisation de l'abonné, il a été prévu une procédure d'authentification particulière consistant, lors de la mise sous tension du téléphone mobile équipé de la carte SIM, à obliger l'utilisateur à composer un code particulier (code PIN) inscrit dans la carte. En d'autres termes, le téléphone mobile ne peut se rattacher, c'est-à-dire s'inscrire, au réseau cellulaire si le code entré par l'utilisateur est erroné.

On a pu constater ces dernier temps une forte augmentation de particuliers s'équipant d'un téléphone mobile. Il s'agit cependant dans la majorité des cas de personnes appartenant à une tranche d'âges prédéterminée. Or, l'avantage procuré par le fait d'être joint ou de pouvoir joindre quelqu'un à tout moment devrait être accessible à toutes les tranches d'âges, notamment aux jeunes enfants.

Dans ce contexte cependant, les inconvénients posés par les téléphones mobiles existants sont les suivants :

- La mise en place de la carte SIM avant la première mise en service du téléphone n'est pas toujours aisée, surtout lorsqu'il s'agit d'une carte de type microSIM.

- La procédure d'authentification précédemment décrite peut être également considérée comme compliquée pour certains utilisateurs tels que de jeunes enfants. Certes, il est possible de désactiver cette procédure, mais les avantages qu'elle procure sur le plan de la sécurité sont alors perdus.

- De plus, il est nécessaire de pouvoir contrôler les communications passées par un enfant pour des raisons évidentes de budget, et donc, de pouvoir limiter le nombre de numéros d'appels possibles depuis le téléphone. A ce titre certains opérateurs prennent en compte ce problème en proposant des cartes contenant un répertoire avec un nombre de correspondants limités afin que les enfants ne puissent initialiser qu'un nombre restreint d'appels sortants.

- Enfin, outre la complexité de fonctionnement des téléphones existant sur le marché à l'heure actuelle, ces téléphones restent coûteux à l'achat pour l'utilisateur. On conçoit donc aisément qu'il n'est pas facile pour des parents d'investir dans un téléphone portable pour chacun de leurs enfants.

Un autre example est décrit dans le document US 5 818 915, J.J. Hayes, (6-10-1998).

La présente invention a pour but de résoudre les problèmes précédents en proposant un procédé d'autorisation d'accès à un réseau cellulaire de radiocommunications à partir d'un téléphone simplifié, notamment par le fait qu'il ne comporte aucun module d'identification d'abonné.

Pour ce faire, la présente invention a pour objet un procédé d'autorisation d'accès à un réseau public de radiocommunications, caractérisé en ce qu'il comporte les phases suivantes :

- Une phase d'initialisation de service lors de laquelle un abonné au réseau fournit au réseau au moins une donnée représentative d'un numéro de série propre à un téléphone mobile simplifié apte à fonctionner dans le réseau sans module d'identification d'abonné et comportant des moyens pour l'appel d'au moins un numéro de téléphone prédéfini, ainsi qu'une donnée caractéristique dudit numéro de téléphone prédéfini, ces données étant mémorisées dans le réseau;

- Une phase d'inscription dudit téléphone mobile simplifié au cours de laquelle le téléphone mobile simplifié transmet automatiquement au réseau par voie radio la donnée représentative du numéro de série ainsi qu'un premier code représentatif du numéro de service pour la connexion audit service, le réseau comparant, après connexion au service, la donnée représentative du numéro de série reçue avec la donnée représentative du numéro de série mémorisée, autorisant l'inscription en cas de correspondance et transmettant par voie radio au téléphone mobile simplifié un code d'autorisation, ledit code d'autorisation étant en outre mémorisé dans le réseau;

- Une phase d'utilisation dudit téléphone mobile simplifié pour un appel sortant fait à partir dudit téléphone mobile simplifié, au cours de laquelle l'activation desdits moyens pour l'appel du numéro de téléphone prédéfini provoque la transmission au réseau par voie radio du premier code) représentatif du numéro de service pour la connexion audit service, dudit code d'autorisation et d'un second code représentatif du numéro appelé, le réseau comparant, après connexion au service, le code d'autorisation et le second code reçus avec les données et le code d'autorisation mémorisés dans le réseau, et autorisant la communication en cas de correspondance .

L'invention a également pour objet un système de radiocommunications comprenant un réseau public de radiocommunications, caractérisé en ce qu'il comprend en outre :

- au moins un téléphone mobile simplifié apte à fonctionner dans le réseau sans module d'identification d'abonné, et comportant des moyens pour l'appel d'au moins un numéro de téléphone prédéfini ;

- des moyens d'initialisation de service par lesquels un abonné audit réseau fournit au réseau au moins une donnée représentative d'un numéro de série propre audit téléphone mobile simplifié, ainsi qu'une donnée caractéristique dudit numéro de téléphone prédéfini, ces données étant mémorisées dans le réseau;

- des moyens de transmission automatique propres audit téléphone mobile simplifié pour transmettre au réseau par voie radio la donnée représentative du numéro de série ainsi qu'un premier code représentatif du numéro de service pour la connexion audit service ;

- des premiers moyens propres au réseau pour comparer, après connexion au service, la donnée représentative du numéro de série reçue avec la donnée représentative du numéro de série mémorisée, autoriser l'inscription du téléphone mobile simplifié dans le réseau en cas de correspondance, transmettre alors audit téléphone mobile simplifié un code d'autorisation et mémoriser ce code d'autorisation dans le réseau;

- des moyens de transmission propres audit téléphone mobile simplifié pour transmettre au réseau par voie radio, suite à l'activation desdits moyens pour l'appel du numéro de téléphone prédéfini, le premier code représentatif du numéro de service pour la connexion audit service , le code d'autorisation et un second code représentatif du numéro appelé ;

- des seconds moyens propres au réseau pour comparer, après connexion au service, le code d'autorisation et le second code reçus avec les données et le code d'autorisation mémorisés dans le réseau, et pour autoriser la communication en cas de correspondance .

Un troisième objet de l'invention concerne un téléphone portable simplifié comportant des moyens de transmission d'un signal radio pour l'inscription et le passage d'une communication dans un réseau cellulaire de radiocommunications, et des moyens de composition d'au moins un numéro de téléphone prédéfini, caractérisé en ce que, le téléphone possédant un numéro de série qui lui est propre, lesdits moyens de transmission transmettent, lors de ladite inscription, un signal radio comportant au moins une donnée représentative dudit numéro de série et un premier code représentatif d'un numéro de service, en ce qu'il comporte en outre des moyens de stockage d'un code d'autorisation envoyé par le réseau suite à ladite inscription, et en ce que lesdits moyens de transmission transmettent, lors de l'appel dudit numéro de téléphone prédéfini, un signal radio comportant au moins le premier code, le code d'autorisation, et un second code représentatif du numéro de téléphone prédéfini.

La présente invention et les avantages qu'elle procure seront mieux compris au vu de la description ci-après faite en référence aux figures annexées, dans lesquelles :

- la figure 1 illustre schématiquement différentes composantes d'un système cellulaire de radiocommunications conforme à l'invention ;

- la figure 2 illustre les différentes étapes de la phase d'initialisation dans une implémentation possible du procédé selon l'invention;

- la figure 3 illustre les différentes étapes de la phase d'inscription du téléphone simplifié dans une implémentation possible du procédé selon l'invention.

- la figure 4 illustre les différentes étapes de la phase d'utilisation du téléphone mobile simplifié pour un appel sortant, et de la phase de facturation dans une implémentation possible du procédé selon l'invention.

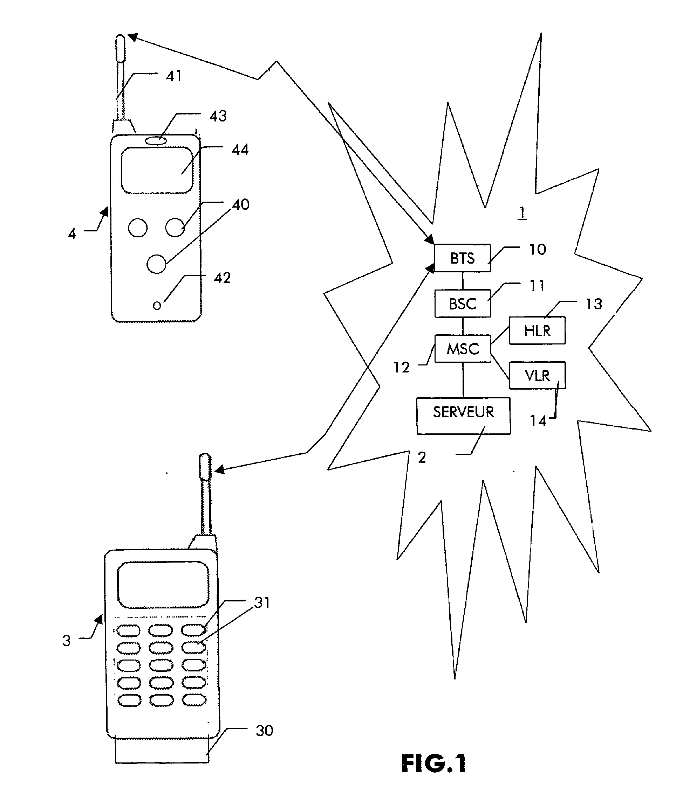

En référence à la figure 1, un système de radiocommunications conforme à l'invention comporte un réseau cellulaire 1, par exemple du type GSM, un serveur 2 relié ou inclus dans le réseau 1, un téléphone mobile classique 3 apte à fonctionner dans le réseau cellulaire par souscription à un abonnement, et un téléphone mobile simplifié 4.

Par téléphone mobile simplifié, on entend un téléphone mobile apte à fonctionner dans le réseau cellulaire 1 sans module d'identification d'abonné, par opposition au téléphone mobile classique 3 qui comporte un lecteur de carte (non représenté) permettant d'insérer un module d'identification 30 propre à l'abonné. Dans la suite de l'exposé, on assimile l'abonné avec son module d'identification 30 qui lui est propre. Tous les paramètres radio nécessaires au fonctionnement du mobile 4 sont stockés dans une mémoire propre au mobile.

Par ailleurs, le téléphone mobile 4 est également simplifié du fait qu'il n'est susceptible de passer des appels que pour un nombre limité de numéros de téléphone, par exemple trois numéros d'appels dans le cas de la figure 1. Le clavier du téléphone 4 peut donc se réduire à un nombre de touches 40 correspondant au moins au nombre de numéros d'appels possibles.

Le téléphone mobile simplifié 4 comporte en outre :

- des moyens de transmission de signaux par voie radio, comprenant notamment une antenne 41 ;

- un microphone 42 et un écouteur 44.

Il peut comporter également, bien que cela ne soit pas nécessaire pour implémenter l'invention, un écran d'affichage 43.

Selon l'invention, l'accès au réseau 1 est rendu possible pour le téléphone mobile simplifié 4 en mettant en oeuvre notamment une phase d'initialisation de service lors de laquelle l'abonné 30, détenteur du téléphone mobile classique 3, fournit au réseau 1 au moins:

- une donnée représentative d'un numéro de série propre au téléphone mobile simplifié 4 d'abonné, par exemple le numéro d'IMEI (initiales anglo-saxonnes mises pour International Mobile station Equipment Identity) ;

- une donnée caractéristique de chaque numéro de téléphone qu'il est possible de joindre depuis le téléphone mobile simplifié 4, ces données étant mémorisées dans une base de données du serveur 2, dans un répertoire privé lié au mobile simplifié 4.

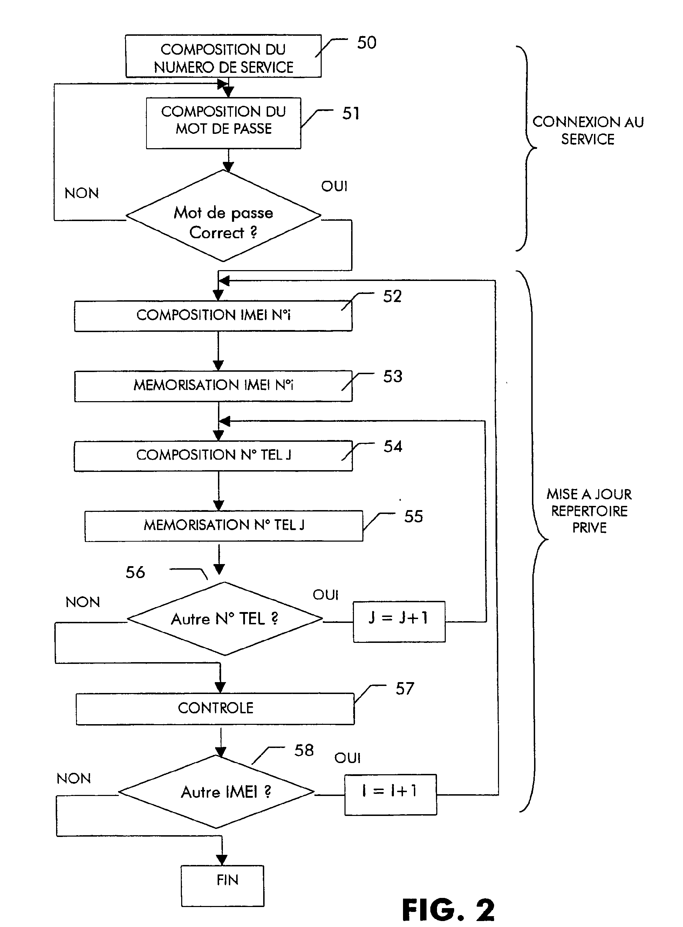

La figure 2 représente schématiquement les différentes étapes qu'il est possible de mettre en oeuvre pour la phase d'initialisation précédente. Ces étapes sont regroupées en deux phases : une première phase dite de connexion au service, et une seconde phase de mise à jour du répertoire privé.

Pour se connecter au service à partir du téléphone mobile classique 3, l'abonné 30 doit au préalable composer (étape 50) un numéro représentatif du numéro de service lié au serveur 2. Puis, pour des raisons de sécurité, on lui impose de préférence de composer un mot de passe (étape 51). Si le mot de passe est correct, l'abonné 30 est invité à composer (étape 52) la donnée IMEI représentative du numéro de série propre au téléphone mobile simplifié 4. Cette donnée est transmise par voie radio au réseau, et mémorisée (étape 53) dans la base de données du serveur 2. L'abonné 30 est ensuite invité à composer (étape 54) la donnée caractéristique de chaque numéro de téléphone J qu'il sera possible de joindre depuis le téléphone mobile simplifié 4. Dans l'exemple de la figure 1, l'abonné 30 pourra associer à chacune des trois touches d'appel 40 du téléphone simplifié 4, un numéro de téléphone donné. Ces données sont également mémorisées (étape 55) au niveau de la base de données du serveur 2. Les étapes 52 à 55 sont réitérées (étape 56) tant que l'abonné 30 désire entrer un nouveau numéro d'appel possible. A la fin du processus de mise à jour du répertoire privé relatif au téléphone mobile simplifié 4, on prévoit de préférence également une étape de vérification 57 au cours de laquelle l'abonné peut contrôler l'exactitude de toutes les données transmises. Puis, si l'abonné désire initialiser un autre téléphone mobile simplifié, les étapes 52 à 57 sont réitérées (étape 58) pour permettre la création ou la mise à jour du répertoire privé lié à cet autre téléphone simplifié.

Bien entendu, il est possible à l'abonné 30 d'effectuer cette phase d'initialisation à partir d'autres dispositifs de télécommunications que son téléphone portable 4, par exemple à partir d'un téléphone filaire, ou via internet.

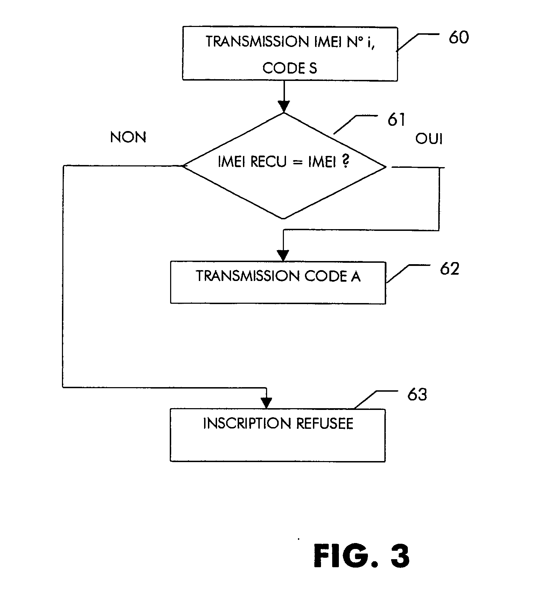

A l'issue de la phase d'initialisation, le téléphone simplifié 4 est prêt à accéder au réseau 1. Lors de sa mise sous tension, le téléphone simplifié 4 va tout d'abord, comme tout téléphone mobile classique, s'inscrire sur le réseau 1. L'inscription au réseau va cependant différer de l'inscription d'un téléphone mobile classique telle que spécifiée dans les recommandations GSM du fait que le téléphone 4 ne comporte pas de module d'identification d'abonné. La phase d'inscription conformément à la présente invention est décrite en référence à la figure 3 :

Au cours de cette phase d'inscription, le téléphone simplifié 4 va transmettre au réseau (étape 60), par voie radio, la donnée IMEI représentative du numéro de série qui lui est propre, ainsi que le code S représentatif du service pour la connexion au serveur 2. Après connexion au serveur 2, le réseau 1 va pouvoir rechercher dans la base de donnée du serveur 2 si la donnée IMEI reçue correspond à une donnée mémorisée dans un répertoire privé ou public si ce service était généralisé pour l'ensemble des opérateurs (étape 61). S'il ne trouve aucune correspondance, l'inscription au réseau est refusée (étape 63). S'il trouve une correspondance, l'inscription est autorisée, et le réseau 1 transmet au téléphone mobile simplifié 4 un code d'autorisation A qui sera mémorisé dans le réseau et dans des moyens de stockage (non représentés) du téléphone simplifié 4 (éta-

**EP 1 059 824 B1**

pe 62). Dans une première mise en oeuvre possible, le code d'autorisation A correspond exactement à la donnée IMEI. En variante, ce code d'autorisation peut être un code provisoire soit généré par le réseau et choisi aléatoirement dans une liste de codes ne correspondant à aucun abonné du réseau 1, soit correspondant à un identificateur de l'abonné 30.

Dans le processus précédent, le cheminement à l'intérieur du réseau 1, suite à une demande d'inscription du mobile 4, est le suivant : la station de base 10 du réseau 1 située dans la cellule dans laquelle se trouve le mobile 4 transmet au contrôleur de station 11 la requête d'inscription comprenant les données transmises par le mobile 4 (IMEI), lequel transmet cette requête à son tour au Contrôleur de trafic 12 (MSC, initiales anglo-saxonnes mises pour Mobile Switch Center). Ce dernier s'adresse au serveur 2 alors que dans le cas normal il transmet la requête à un serveur d'enregistrement (Registre 13, HLR initiales anglo-saxonnes mises pour Home Location Register ou Registre 14, VLR initiales anglo-saxonnes mises pour Visitor Location Register). Il va rechercher dans la base de données du serveur 2 s'il retrouve un répertoire lié à la donnée IMEI reçue. Le cas échéant, le cheminement inverse est effectué pour transmettre le code d'autorisation A au mobile 4.

Cependant, d'autres cheminements à l'intérieur du réseau 1 peuvent être envisagés, sans se départir du cadre de l'invention. On peut notamment utiliser le cheminement utilisé normalement pour l'inscription d'un mobile classique tel le mobile 3, dans lequel le contrôleur 12 va rechercher le répertoire lié à l'IMEI reçu dans le registre 13 des abonnés locaux et éventuellement dans le registre 14 des abonnés visiteurs. Cela suppose que les deux registres 13 et 14 aient été mis à jour au préalable par le serveur 2.

A noter que ce processus d'inscription permet au réseau, lors d'une phase d'utilisation du réseau, de mémoriser une information de localisation du téléphone mobile simplifié 4, soit parce que l'inscription au service a permis au serveur 12 de mémoriser dans quelle cellule du réseau se trouve le mobile simplifié 4, soit parce que les registres 13 ou 14 ont mémorisé cette information, comme spécifié dans un réseau GSM par exemple.

A chaque déplacement du mobile simplifié 4 dans le réseau, c'est-à-dire en cas de changement de cellule, cette information est mise à jour soit dans le serveur 12 soit dans les registres 13 ou 14. Cette mise à jour intervenant soit en état de communication, soit en état de veille ( Location Updating Procedure décrite dans les recommandations GSM par exemple). Ce mécanisme de mise à jour utilise les mêmes cheminements d'informations que ceux décrits dans la procédure d'inscription au service ou intervenant après un marche arrêt du téléphone simplifié.

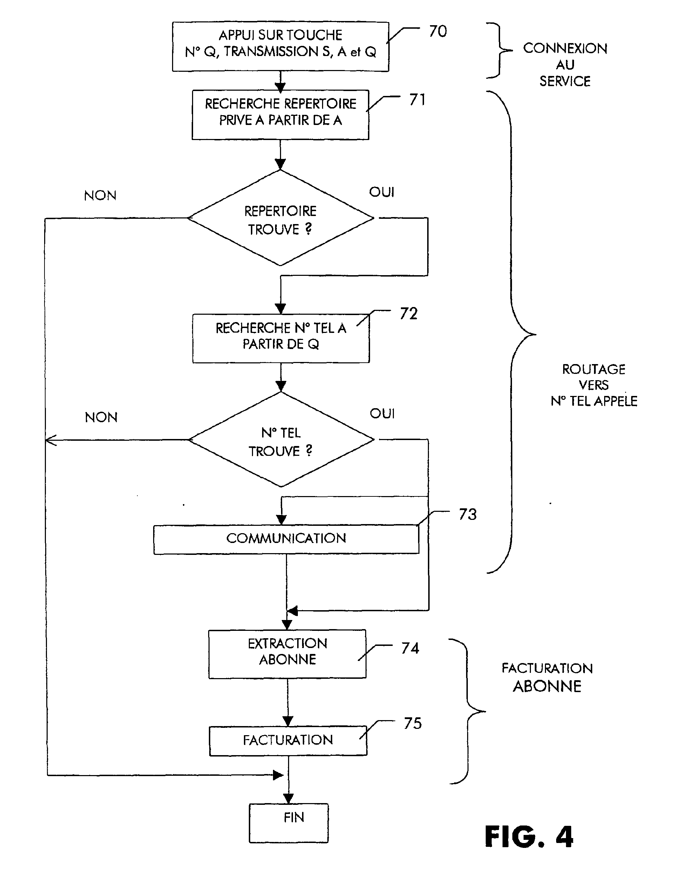

Lorsque le téléphone mobile 4 a reçu un code d'autorisation A du réseau 1, il est prêt pour passer une communication. La phase d'utilisation du téléphone mobile 4 pour un appel sortant, décrite en référence à la figure 4, comprend une étape de connexion au service et une étape permettant le routage vers le numéro de téléphone vers le numéro appelé :

- Connexion au service (étape 70):

Lorsque le détenteur du téléphone mobile 4 appui sur l'une des touches 40 (figure 1) du téléphone, cela provoque la transmission au réseau 1 par voie radio du code S représentatif du service lié au serveur 2, du code d'autorisation A préalablement envoyé par le réseau lors de la phase d'inscription, et d'un code Q lié à la touche 40 qui a été activée, et par conséquent lié au numéro appelé.

- Routage vers le numéro appelé :

Le réseau va alors pouvoir procéder à une série de comparaisons en vue d'effectuer le routage : Il recherche tout d'abord (étape 71), à partir du code d'autorisation A reçu, si la base de données du serveur 2 conserve un répertoire privé correspondant au mobile 4. Si la recherche est infructueuse, l'établissement de la communication est impossible. Lorsque le répertoire correspondant est trouvé, le réseau va rechercher (étape 72), à partir du code Q reçu, si la base de donnée possède, dans le répertoire privé, un numéro de téléphone correspondant à la touche 40 qui a été activée. Là encore, en cas de recherche infructueuse, l'établissement de la communication est refusé; Si en revanche un numéro de téléphone est trouvé, la communication peut être établie (étape 73).

Dans une mise en oeuvre préférée de l'invention, le procédé comporte en outre une phase de transmission d'informations de facturation sur un compte de l'abonné 30. En référence à la figure 4, cette phase peut consister, suite à chaque communication passée à partir du téléphone mobile simplifié 4, à extraire (étape 74) l'identifiant de l'abonné qui a initialisé le service, de manière à établir une liste de toutes les communications effectuées, puis à établir la facture proprement dite (étape 75), par exemple mensuellement, sur le compte de l'abonné 30.

Tout ce qui a été précédemment décrit est relatif à l'autorisation d'accès au réseau 1 donné au téléphone mobile simplifié 4 pour que ce dernier puisse s'inscrire, et effectuer des appels sortants sur un nombre limité de numéros d'appels possibles.

On peut maintenant envisager que le téléphone mobile simplifié puisse également être joint. Cela est possible du fait que le réseau possède une information de localisation du téléphone mobile simplifié 4 suite à la phase d'inscription de ce téléphone mobile :

Dans une première implémentation possible de l'invention, le téléphone mobile simplifié 4 ne peut pas recevoir directement d'appels entrants, mais peut recevoir une indication qu'une personne, faisant partie des numéros de téléphones en nombre limité qu'il a le droit d'appeler, cherche à le joindre. Dans ce cas, la personne qui cherche à contacter le détenteur du téléphone mobile simplifié 4 se connecte au service proposé par le serveur 2, et délivre la donnée IMEI représentative du téléphone mobile simplifié 4. Le réseau 1 peut alors effectuer une recherche de la cellule du réseau, si elle existe, sur laquelle le téléphone mobile 4 s'est rattaché lors de la dernière phase d'inscription au réseau. Si une telle cellule a été trouvée, le réseau 1 envoie alors au téléphone mobile simplifié 4 un message de service ou SMS-PP (initiales anglo-saxonnes mises pour Short Message Service Point-to-Point) contenant les informations relatives à l'appelant. A la réception d'un tel message, le téléphone mobile simplifié 4 peut alors soit, s'il dispose d'un écran, afficher un message indiquant au détenteur du téléphone mobile 4 qu'il doit rappeler la personne qui cherche à le joindre, soit faire clignoter la touche 40 associée au numéro de téléphone de l'appelant. Cette dernière variante est très pratique pour un enfant qui n'a plus qu'à appuyer sur la touche qui clignote pour rappeler la personne qui tentait de le joindre.

Dans une autre variante préférée de l'invention, le téléphone mobile simplifié 4 peut recevoir directement un appel entrant qui lui est dirigé par le réseau 1. Le principal problème qui se pose dans ce cas provient du fait qu'un réseau de radiocommunications cellulaire, par exemple du type GSM, ne sait diriger un appel sur un téléphone mobile qu'en envoyant, sur un canal spécifique dit canal d'appel (canal PCH, initiales anglo-saxonnes mises pour Paging CHannel), un message particulier comprenant l'identifiant IMSI (initiales anglo-saxonnes mises pour International Mobile Subscriber Identity). Or, dans le cas du téléphone mobile simplifié 4, il n'y a pas d'IMSI puisque le téléphone fonctionne sans module d'identification d'abonné. Une première solution pourrait consister, au moment de la fabrication ou de la commercialisation d'un téléphone mobile simplifié, un code IMSI factice, choisi dans une liste de codes ne correspondant à aucun code IMSI d'abonné. On voit tout de suite les limites d'une telle solution en termes de nombre de codes factices qu'il faudrait générer. Il faut donc trouver une solution pour pouvoir diriger un appel vers le téléphone mobile 4, sans avoir à changer la structure du message d'appel envoyé (Paging Message), et sans avoir à générer un nombre trop important de codes IMSI factices .

Une première solution proposée par la présente invention consiste à :

- stocker, dans une mémoire du téléphone mobile simplifié 4, au moment de la fabrication de ce téléphone, une liste de n codes, par exemple 10 codes, spécifiques, de même structure qu'un code IMSI, cette liste étant par ailleurs connue du réseau 1 et étant identique pour tous les téléphones mobiles simplifiés susceptibles d'accéder au réseau 1; et

- affecter en outre au téléphone mobile 4 une séquence particulière comprenant un nombre m inférieur à n, par exemple 4, de codes pris dans la liste, cette séquence étant unique.

Lorsque le réseau souhaite acheminer un appel vers le téléphone mobile simplifié 4, il lui suffit d'envoyer, sur le canal d'appel PCH de la cellule où est localisé le téléphone simplifié 4, un identificateur composé d'un nombre m égal ici à quatre messages successifs véhiculant chacun un code IMSI selon la séquence affectée au téléphone mobile simplifié 4. Le téléphone simplifié 4 pourra alors reconnaître sa propre séquence, et répondre à l'appel. Avec cette solution, le réseau peut acheminer des appels vers $C_m^n$ téléphones simplifiés distincts, chacun présentant sa séquence unique faite à partir de la même liste de codes factices.

Une seconde solution proposée dans le cadre de l'invention consiste à affecter, au moment de la fabrication ou de la commercialisation du téléphone simplifié 4, un code de type IMSI factice qui peut être commun à différents téléphones simplifiés, et d'utiliser, dans le message d'appel, un identificateur composé de la combinaison du code de type IMSI factice, et du code IMEI. Par rapport à la solution précédente, cette seconde solution est plus sûre et permet d'acheminer un appel plus rapidement.

Une troisième solution consiste à utiliser directement le numéro IMEI du terminal 4 dans le message d'appel. Cette solution a le mérite de ne créer aucune donnée supplémentaire dans l'utilisation du service.

**Revendications**

1. Procédé d'autorisation d'accès à un réseau public de radiocommunications (1), **caractérisé en ce qu'**il comporte les phases suivantes :

    - Une phase (50 à 58) d'initialisation de service lors de laquelle un abonné (30) au réseau (1) fournit au réseau au moins une donnée (IMEI) représentative d'un numéro de série propre à un téléphone mobile simplifié (4) apte à fonctionner dans le réseau sans module d'identification d'abonné et comportant des moyens (40) pour l'appel d'au moins un numéro de téléphone prédéfini, ainsi qu'une donnée (Q) caractéristique dudit numéro de téléphone prédéfini, ces données étant mémorisées dans le réseau (1);
    - Une phase (60 à 62) d'inscription dudit téléphone mobile simplifié (4) au cours de laquelle le téléphone mobile simplifié (4) transmet automatiquement au réseau par voie radio la donnée (IMEI) représentative du numéro de série ainsi qu'un premier code (S) représentatif du numéro de service pour la connexion audit service, le réseau comparant, après connexion au service, la donnée représentative du numéro de série reçue avec la donnée représentative du numéro de série mémorisée, autorisant l'inscription en cas de correspondance et transmettant par voie radio au téléphone mobile simplifié (4) un code d'autorisation (A), ledit code d'autorisation (A) étant en outre mémorisé dans le réseau (1);

- Une phase (70 à 73) d'utilisation dudit téléphone mobile simplifié (4) pour un appel sortant fait à partir dudit téléphone mobile simplifié, au cours de laquelle l'activation desdits moyens (40) pour l'appel du numéro de téléphone prédéfini provoque la transmission au réseau (1) par voie radio du premier code (S) représentatif du numéro de service pour la connexion audit service, dudit code d'autorisation (A) et d'un second code (Q) représentatif du numéro appelé, le réseau (1) comparant, après connexion au service, le code d'autorisation (A) et le second code (Q) reçus avec les données et le code d'autorisation mémorisés dans le réseau (1), et autorisant la communication en cas de correspondance .

2. Procédé selon la revendication 1, **caractérisé en ce que** le code d'autorisation (A) transmis par le réseau (1) au téléphone mobile simplifié (4) au cours de la phase d'inscription correspond à la donnée (IMEI) représentative du numéro de série.

3. Procédé selon la revendication 1, **caractérisé en ce que** le code d'autorisation (A) transmis par le réseau (1) au téléphone mobile simplifié (4) au cours de la phase d'inscription correspond à un code provisoire mémorisé dans le téléphone mobile simplifié.

4. Procédé selon la revendication 3, **caractérisé en ce que** le code provisoire correspond à un identificateur de l'abonné (30).

5. Procédé selon la revendication 3, **caractérisé en ce que** le code provisoire est choisi aléatoirement dans une liste de codes prédéterminée ne correspondant à aucun abonné.

6. Procédé selon l'une quelconque des revendications précédentes, **caractérisé en ce qu'**il comporte en outre une phase (74 à 75) de transmission d'informations de facturation sur un compte dudit abonné (30).

7. Procédé selon l'une quelconques des revendications précédentes, **caractérisé en ce que** ladite phase d'initialisation consiste à fournir au réseau (1) lesdites données par voie radio, à partir d'un téléphone mobile classique (3) fonctionnant avec un module d'identification (30) lié audit abonné.

8. Procédé selon la revendication 7, **caractérisé en ce qu'**il consiste à effectuer, à partir de moyens d'entrée (31) du téléphone mobile classique (3), les étapes suivantes :

   - composition (50) d'un numéro (S) représentatif du numéro de service pour la connexion audit service ;
   - composition (51) d'un mot de passe ;
   - composition (52) de la donnée (IMEI) représentative du numéro de série propre au téléphone mobile simplifié ;
   - composition (55) du numéro de téléphone prédéfini.

9. Procédé selon l'une quelconque des revendications précédentes, **caractérisé en ce qu'**il comporte en outre une phase d'utilisation du réseau pour mémoriser une information de localisation dudit téléphone mobile simplifié (4).

10. Procédé selon la revendication 9, **caractérisé en ce qu'**il comporte en outre une phase d'utilisation du téléphone mobile simplifié (4) en réception d'un appel entrant, dans laquelle le réseau (1) envoie au téléphone mobile simplifié, sur un canal de signalisation d'appel , un signal radio comprenant un identificateur propre audit téléphone mobile simplifié (4).

11. Procédé selon la revendication 10, **caractérisé en ce que** ledit identificateur est constitué d'un nombre m de messages successifs véhiculant chacun un code prédéfini selon une séquence propre au téléphone mobile simplifié (4).

12. Procédé selon la revendication 11, **caractérisé en ce que** ladite séquence est composée d'un nombre m de codes choisis dans une liste prédéterminée de n codes.

13. Procédé selon la revendication 10, **caractérisé en ce que** ledit identificateur est composé de la combinaison d'un code prédéfini et de la donnée (IMEI) représentative du numéro de série propre au téléphone mobile simplifié, et est véhiculé via un seul message sur le canal de signalisation d'appel.

14. Procédé selon la revendication 10, **caractérisé en ce que** ledit identificateur est la donnée (IMEI) représentative du numéro de série propre au téléphone mobile simplifié (4), et est véhiculé via un seul message sur le canal de signalisation d'appel.

15. Système de radiocommunications comprenant un réseau public de radiocommunications (1), **caractérisé en ce qu'**il comprend en outre :

   - au moins un téléphone mobile simplifié (4) apte à fonctionner dans le réseau (1) sans module d'identification d'abonné, et comportant des moyens (40) pour l'appel d'au moins un numéro de téléphone prédéfini ;

- des moyens (3) d'initialisation de service par lesquels un abonné (30) audit réseau (1) fournit au réseau au moins une donnée (IMEI) représentative d'un numéro de série propre audit téléphone mobile simplifié (4), ainsi qu'une donnée (Q) caractéristique dudit numéro de téléphone prédéfini, ces données étant mémorisées dans le réseau (1);

- des moyens (41) de transmission automatique propres audit téléphone mobile simplifié (4) pour transmettre au réseau par voie radio la donnée (IMEI) représentative du numéro de série ainsi qu'un premier code (S) représentatif du numéro de service pour la connexion audit service ;

- des premiers moyens (2, 10 à 14) propres au réseau (1) pour comparer, après connexion au service, la donnée (IMEI) représentative du numéro de série reçue avec la donnée représentative du numéro de série mémorisée, autoriser l'inscription du téléphone mobile simplifié (4) dans le réseau en cas de correspondance, transmettre alors audit téléphone mobile simplifié (4) un code d'autorisation (A) et mémoriser ce code d'autorisation dans le réseau (1);

- des moyens (41) de transmission propres audit téléphone mobile simplifié pour transmettre au réseau par voie radio, suite à l'activation desdits moyens (40) pour l'appel du numéro de téléphone prédéfini, le premier code (S) représentatif du numéro de service pour la connexion audit service , le code d'autorisation (A) et un second code (Q) représentatif du numéro appelé ;

- des seconds moyens (2,10 à 14) propres au réseau (1) pour comparer, après connexion au service, le code d'autorisation et le second code reçus avec les données et le code d'autorisation mémorisés dans le réseau, et pour autoriser la communication en cas de correspondance .

**16.** Téléphone portable simplifié comportant des moyens de transmission (41) d'un signal radio pour l'inscription et le passage d'une communication dans un réseau public de radiocommunications, et des moyens (40) de composition d'au moins un numéro de téléphone prédéfini, **caractérisé en ce que**, le téléphone apte à fonctionner dans le réseau public de radiocommunications (1) sans module d'identification d'abonné, ledit telephone possédant un numéro de série qui lui est propre (IMEI), lesdits moyens de transmission transmettent, lors de ladite inscription, un signal radio comportant au moins une donnée représentative dudit numéro de série et un premier code (S) représentatif d'un numéro de service, **en ce qu'**il comporte en outre des moyens de stockage d'un code d'autorisation (A) envoyé par le réseau suite à ladite inscription, et **en ce que** lesdits moyens de transmission transmettent, lors de l'appel dudit numéro de téléphone prédéfini, un signal radio comportant au moins le premier code (S), le code d'autorisation (A), et un second code (Q) représentatif du numéro de téléphone prédéfini.

**Claims**

**1.** A method for authorizing access to a public radio communication network (1), **characterized in that** it comprises the following phases:

- a phase (50 to 58) of service initialization, during which a subscriber (30) to the network (1) provides the network with at least one piece of data (IMEI) representative of a serial number specific to a simplified mobile telephone (4) capable of operating within the network without a subscriber identification module and comprising means (40) for calling at least one preset telephone number, as well as a piece of data (Q) characteristic of said preset telephone number, said data being saved within the network (1);

- a phase (60 to 62) of registering said simplified mobile telephone (4) during which the simplified mobile telephone (4) automatically transmits to the network, via radio waves, the data (IMEI) representative of the serial number, as well as a first code (S) representative of the service number for connecting to said service, with the network, following connection to the service, comparing the received data representative of the serial number with the saved data representative of the serial number, authorizing registration in the event of a match, and transmitting to the simplified mobile telephone (4), via radio waves, an authorization code (A), said authorization code (A) further being saved within the network (1);

- a phase (70 to 73) of using said simplified mobile telephone (4) for an outgoing call dialed from said simplified mobile telephone (4), during which the activation of said means (40) for calling the preset telephone number causes the transmission to the network (1), by radio waves, of the first code (S) representative of the service number for connecting to said service, said authorization code (A), and a second code (Q) representative of the dialed number, with the network (1), following connection to the service, comparing the authorization code (A) and the second code (Q) received with the data and authorization code saved within the network (1), and authorizing communication in the event of a match.

**2.** A method according, to claim 1, **characterized in that** the authorization code (A) transmitted by the network (1) to the simplified mobile telephone (4) during the registration phase corresponds to the piece of data (IMEI) representative of the serial number.

**3.** A method according to claim 1, **characterized in that** the authorization code (A) transmitted by the network (1) to the simplified mobile telephone (4) during the registration phase corresponds to a temporary code saved within the simplified mobile telephone.

**4.** A method according to claim 3, **characterized in that** the temporary code corresponds to a subscriber identifier (30).

**5.** A method according to claim 3, **characterized in that** the temporary code is chosen randomly from a list of predetermined codes that do not correspond to any subscriber.

**6.** A method according to any one of the preceding claims, **characterized in that** it further comprises a phase (74 to 75) of billing information transmission to an account of said subscriber (30).

**7.** A method according to any one of the preceding claims, **characterized in that** said initialization phase consists in providing the network (1) with said data by radio waves, from a conventional mobile telephone (3) operating with an identification module (30) linked to said subscriber.

**8.** A method according to claim 7, **characterized in that** it consists in performing the following steps from the conventional mobile telephone (3) input means (31):

- entering (50) a number (S) representative of the service number for connecting to said service;
- entering (51) a password;
- entering (52) the data (IMEI) representative of the serial number that is specific to the simplified mobile telephone;
- entering (55) the preset telephone number.

**9.** A method according to any one of the preceding claims, **characterized in that** it further comprises a phase of using the network to save a piece of location information regarding said simplified mobile telephone (4).

**10.** A method according to claim 9, **characterized in that** it further comprises a simplified phase of using the mobile telephone (4) when an incoming call is received, wherein the network (1) sends the simplified mobile telephone, over a call signaling channel, a radio signal comprising an identifier specific to the simplified mobile telephone (4).

**11.** A method according to claim 10, **characterized in that** said identifier is made up of a number m of successive messages each carrying a predefined code, in a sequence specific to the simplified mobile telephone (4).

**12.** A method according to claim 11, **characterized in that** said sequence is made up of a number m of codes chosen from a predetermined list of n codes.

**13.** A method according to claim 10, **characterized in that** said identifier is made up of the combination of a predefined code and the data (IMEI) representative of the serial number specific to the simplified mobile telephone, and is carried by only one message over the call signaling channel.

**14.** A method according to claim 10, **characterized in that** said identifier is the data (IMEI) representative of the serial number specific to the simplified mobile telephone (4), and is carried by only one message over the call signaling channel.

**15.** A radio communication system comprising a public radiocommunication network (1), **characterized in that** it further composes:

- at least one simplified mobile telephone (4) capable of operating within the network (1) without a subscriber identification module, and comprising means (40) for casing at least one, preset telephone number;
- service initialization means (3), whereby a subscriber (30) to said network (1) provides the network with at least one piece of data (IMEI) representative of a serial number specific to said simplified mobile telephone (4), as well as a piece of data (Q) characteristic of said preset telephone number, said data (IMEI, Q) being saved within the network (1);
- automatic transmission means (41) specific to said simplified mobile telephone (4), for transmitting to the network, via radio waves, the data (IMEI) representative of the serial number, as well as a first code (S) representative of the service number for connecting to said service;
- first means (2, 10 to 14) specific to the network (1) for comparing, after connecting to the service, the received data (IMEI) representative of the serial number with the data representative of the saved serial number, authorizing the registration of the simplified mobile telephone (4) to the network in the event of a match, and then transmitting an authorization code (A) to said simplified mobile telephone (4), and saving this authorization code within the network (1);

- transmission means (41) specific to said simplified mobile telephone, for transmitting to the network, via radio waves, following the activation of said means (40) for calling the preset telephone number, the first code (S) representative of the service number for connecting to said service, the authorization code (A), and a second code (Q) representative of the dialed number;

- second means (2, 10 to 14) specific to the network (1) for comparing, after connecting to the service, the authorization code and second code that were received with the data and the authorization code that were saved within the network, and for authorizing communication in the event of a match.

**16.** A simplified portable telephone, comprising radio signal transmission means (41) in order to register and send communications within a public radio communication network, and means (40) for entering at least one preset telephone number, **characterized in that**, the telephone being capable of operating within the public radio communication network (1) without a subscriber identification module, said telephone possessing a serial number specific to itself (IMEI), said transmission means transmit, during said registration, a radio signal comprising at least one piece of data representative of said serial number and a first code (S) representative of a service number, **in that** it further comprises storage means for storing an authorization code (A) sent by the network following said registration, and **in that** said transmission means transmit, when calling said preset telephone number, a radio signal comprising at least the first code (S), the authorization code (A), and a second code (Q) representative of the preset telephone number.

**Patentansprüche**

**1.** Verfahren zur Erteilung der Zulassung zu einem öffentlichen Funkkommunikationsnetzwerk (1), **dadurch gekennzeichnet, dass** es die folgenden Phasen umfasst:

- Eine Phase (50 bis 58) der Dienstinitialisierung, während welcher ein Netzwerkteilnehmer (30) dem Netzwerk (1) mindestens eine Information (IMEI), die für die einem vereinfachten Mobiltelefon (4), welches fähig ist, ohne Teilnehmerkennungsmodul im Netz zu funktionieren und Mittel (40) zum Rufen von mindestens einer vorbestimmten Telefonnummer umfasst, eigene Seriennummer repräsentativ ist, sowie eine für die besagte vorbestimmte Telefonnummer charakteristische information (Q) liefert, wobei diese informationen im Netzwerk (1) gespeichert werden;

- Einen Phase (60 bis 62) des Anmeldens des besagten vereinfachten Mobiltelefons (4), während welcher das vereinfachte Mobiltelefon (4) automatisch die Information (IMEI), welche für die Seriennummer repräsentativ ist, sowie einen ersten Code (S), welcher für die Dienstnummer für die Verbindung mit dem besagten Dienst repräsentativ ist, per Funk an das Netzwerk überträgt, wobei das Netzwerk nach Herstellen der Verbindung mit dem Dienst die für die empfangene Seriennummer repräsentative Information mit der für die gespeicherte Seriennummer repräsentative information vergleicht und die Anmeldung im Fall der Übereinstimmung zulässt und per Funk einen Zulassungscode (A) an das vereinfachte Mobiltelefon (4) sendet, wobei der besagte Zulassungscode (A) außerdem im Netzwerk (1) gespeichert wird;

- Einen Phase (70 bis 73) der Benutzung des besagten vereinfachten Mobiltelefons (4) für einen von dem besagten vereinfachten Mobiltelefon ausgehenden Ruf, während welcher die Aktivierung der besagten Mittel (40) zum Rufen der vorbestimmten Telefonnummer die Übertragung des ersten Codes (S), welcher für die Dienstnummer für die Verbindung mit dem besagten Dienst repräsentativ ist, des besagten Zulassungscodes (A) und eines zweiten Codes (Q), welcher für die gerufene Nummer repräsentativ ist, per Funk an das Netzwerk auslöst, wobei das Netzwerk (1) nach Herstellender Verbindung mit dem Dienst den empfangenen Zulassungscode (A) und den empfangenen zweiten Code (Q) mit den Daten und dem Zulassungscode, welche im Netzwerk (1) gespeichert sind, vergleicht und im Fall der Übereinstimmung die Verbindung zulässt.

**2.** Verfahren nach Anspruch 1, **dadurch gekennzeichnet, dass** der während der Phase des Anmeldens von dem Netzwerk (1) an das vereinfachte Mobiltelefon (4) gesendete Zulassungscode (A) der Information (IMEI), welche für die Seriennummer repräsentativ ist, entspricht.

**3.** Verfahren nach Anspruch 1, **dadurch gekennzeichnet, dass** der während der Phase des Anmeldens von Netzwerk (1) an das vereinfachte Mobiltelefon (4) gesendete Zulassungscode (A) einem im vereinfachten Mobiltefefon gespeicherten provisorischen Code entspricht.

**4.** Verfahren nach Anspruch 3, **dadurch gekenn-**

**zeichnet, dass** der provisorische Code einer Kennung des Teilnehmers (30) entspricht.

5. Verfahren nach Anspruch 3, **dadurch gekennzeichnet, dass** der provisorische Code zufallsmäßig aus einer vorher festgelegten Codeliste, welche keinem Teilnehmer entspricht, gewählt wird.

6. Verfahren nach einem beliebigen der vorstehenden Ansprüche, **dadurch gekennzeichnet, dass** es weiterhin eine Phase (74 bis 75) des Übertragens von Vergebührungsinformationen auf ein Konto des besagten Teilnehmers (30) umfasst.

7. Verfahren nach einem beliebigen der vorstehenden Ansprüche, **dadurch gekennzeichnet, dass** die besagte Phase der Initialisierung darin besteht, die besagten Daten per Funk von einem klassischen Mobiltelefon (3), welches mit einem dem besagten Teilnehmer zugeordneten Kennungsmodul (30) arbeitet, an das Netzwerk (1) zu senden.

8. Verfahren nach Anspruch 7, **dadurch gekennzeichnet, dass** es darin besteht, über die Eingabemittel (31) des klassischen Mobiltelefons (3) die folgenden Schritte durchzuführen:

  - Wählen (50) einer Nummer (S), welche für die Dienstnummer für die Verbindung mit dem besagten Dienst repräsentativ ist;
  - Wählen (51) eines Passworts;
  - Wahlen (52) der Information (IMEI), welche für die dem vereinfachten Mobiltelefon eigene Seriennummer repräsentativ ist;
  - Wählen (54) der vorbestimmten Telefonnummer.

9. Verfahren nach einem beliebigen der vorstehenden Ansprüche, **dadurch gekennzeichnet, dass** es weiterhin eine Phase der Benutzung des Netzwerks zum Speichern einer Ortungsinformation des besagten vereinfachten Mobiltelefons (4) umfasst.

10. Verfahren nach Anspruch 9, **dadurch gekennzeichnet, dass** es weiterhin eine Phase der Benutzung des vereinfachten Mobiltelefons (4) zum Empfangen eines eingehenden Rufs umfasst, während welcher das Netzwerk (1) ein Funksignal, welches eine dem vereinfachten Mobiltelefon (4) eigene Kennung enthält, auf einem Rufsignalisierungskanal an das vereinfachte Mobiltelefon (4) sendet.

11. Verfahren nach Anspruch 10, **dadurch gekennzeichnet, dass** die besagte Kennung aus einer Anzahl m von aufeinanderfolgenden Nachrichten, welche jeweils einen vorbestimmten Code gemäß einer dem vereinfachten Mobiltelefon (4) eigenen Folge befördern, besteht.

12. Verfahren nach Anspruch 11, **dadurch gekennzeichnet, dass** die besagte Folge aus einer Anzahl m von aus einer vorher festgelegten Liste von n Codes gewählten Codes zusammengesetzt wird.

13. Verfahren nach Anspruch 10, **dadurch gekennzeichnet, dass** die besagte Kennung aus der Kombination eines vorbestimmten Codes und der Information (IMEI), welche für die dem vereinfachten Mobiltelefon eigenen Seriennummer repräsentativ ist, zusammengesetzt wird und über eine einzige Nachricht auf dem Rufsignalisierungskanal befördert wird.

14. Verfahren nach Anspruch 10, **dadurch gekennzeichnet, dass** die besagte Kennung die für die dem vereinfachten Mobiltelefon (4) eigene Seriennummer repräsentative Information (IMEI) ist und über eine einzige Nachricht auf dem Rufsfgnalisierungskanal befördern wird.

15. Funkkommunikationssystem, welches ein öffentliches Funkkommunikationsnetzwerk (1) umfasst und **dadurch gekennzeichnet ist, dass** es weiterhin umfasst:

  - Mindestens ein vereinfachtes Mobiltelefon (4), welches fähig ist, ohne Teilnehmerkennungsmodul im Netzwerk (1) zu funktionieren und Mittel (40) zum Rufen von mindestens einer vorbestimmten Telefonnummer umfasst;
  - Mittel (3) zur Dienstinitialisierung, über welche ein Teilnehmer (30) am besagten Netzwerk (1) mindestens eine Information (IMEI), die für die dem vereinfachten Mobiltelefon (4) eigene Seriennummer repräsentativ ist, sowie eine für die besagte vorbestimmte Telefonnummer charakteristische Information (Q) liefert, wobei diese Informationen im Netzwerk (1) gespeichert werden;
  - Mittel (41) zur automatischen Übertragung, welche dem besagten vereinfachten Mobiltelefon (4) eigen sind, um die für die Seriennummer repräsentative Information (IMEI) sowie einen für die Dienstnummer für die Verbindung mit dem besagten Dienst repräsentativen ersten Code (S) per Funk an das Netzwerk zu übertragen;
  - erste Mittel (2, 10 bis 14), welche dem Netzwerk (1) eigen sind, um nach der Herstellung der Verbindung mit dem Dienst die für die empfangene Seriennummer repräsentative Information (IMEI) mit der gespeicherten Information, welche für die Seriennummer repräsentativ ist, zu vergleichen, im Fall der Übereinstimmung die Anmeldung des vereinfachten Mobiltelefons (4) im Netzwerk zuzulassen, anschließend einen Zulassungscode (A) an das besagte vereinfachte Mobilitelefon (4) zu senden und diesen Zulassungscode im Netzwerk (1) zu speichern;
- Übertragungsmittel (41), welche dem besagten vereinfachten Mobiltelefon eigen sind, um nach der Aktivierung der besagten Mittel (40) zum Rufen der vorbestimmten Telefonnummer den für die Dienstnummer für die Verbindung mit dem besagten Dienst repräsentativen ersten Code (S), den Zulassungscode (A) und einen für die gerufene Nummer repräsentativen zweiten Code (Q) per Funk an das Netzwerk zu übertragen,
- zweite Mittel (2, 10 bis 14), welche dem Netzwerk (1) eigen sind, um nach der Herstellung der Verbindung mit dem Dienst den empfangenen Zulassungscode und den empfangenen zweiten Code mit den Daten und dem Zulassungscode, welche im Netzwerk gespeichert sind, zu verglichen und im Fall der Übereinstimmung die Verbindung zuzulassen.

16. . Vereinfachtes tragbares Telefon, welches Mittel (41) zum Übertragen eines Funksignals für die Anmeldung und die einer Verbindung im öffentlichen Funkkommunikationsnetzwerk sowie Mittel (40) zum Wählen von mindestens einer vorbestimmten Telefonnummer umfasst, **dadurch gekennzeichnet, dass** das Telefon fähig ist, in dem öffentlichen Kommunikationsnetz (1) ohne ein Teilnehmerkennungsmodul zu funktionieren, wobei das besagte Telefon eine ihm eigene Seriennummer (IMEI) besitzt und die besagten Übertragungsmittel bei der besagten Anmeldung ein Funksignal übertragen, welches mindestens eine für die besagte Seriennummer repräsentative Information und einen ersten für eine Dienstnummer repräsentativen Code (S) enthält, dass es weiterhin Mittel zum Speichern eines vom Netzwerk im Anschluss an die besagte Anmeldung gesendeten Zulassungscodes (A) umfasst, und dass die besagten Übertragungsmittel während des Rufs der besagten vorbestimmen Telefonnummer ein Funksignal übermitteln, welches mindestens den ersten Code (S), den Zulassungscode (A) und einen zweiten Code (Q), welcher für die vorbestimmte Telefonnummer repräsentativ ist, enthält.

**FIG.1**

COMPOSITION DU
NUMERO DE SERVICE ⟋ 50

COMPOSITION DU
MOT DE PASSE ⟋ 51

NON                      OUI

Mot de passe
Correct ?

CONNEXION AU
SERVICE

COMPOSITION IMEI N°i ⟋ 52

MEMORISATION IMEI N°i ⟋ 53

COMPOSITION N° TEL J ⟋ 54

MEMORISATION N° TEL J ⟋ 55

56

NON             OUI

Autre N° TEL ?      J = J+1

MISE A JOUR
REPERTOIRE
PRIVE

CONTROLE ⟋ 57

58      OUI

NON

Autre IMEI ?      I = I+1

FIN

**FIG. 2**

```
                      ┌─────────────────────────┐
                      │  TRANSMISSION IMEI N° i, │────  60
                      │        CODE S            │
                      └─────────────────────────┘
                                  │
                                  ▼
                              /────────\────  61
              NON          /             \           OUI
                        <  IMEI RECU = IMEI ?  >
                           \               /
                             \────────/
                                  │
                                  ▼
                      ┌─────────────────────────┐
                      │   TRANSMISSION CODE A    │────  62
                      └─────────────────────────┘


                      ┌─────────────────────────┐
                      │   INSCRIPTION REFUSEE    │────  63
                      └─────────────────────────┘
```

**FIG. 3**

APPUI SUR TOUCHE
N° Q, TRANSMISSION S, A et Q ⟍ 70

RECHERCHE REPERTOIRE
PRIVE A PARTIR DE A ⟍ 71

REPERTOIRE
TROUVE ?

NON          OUI

RECHERCHE N° TEL A
PARTIR DE Q ⟍ 72

N° TEL
TROUVE ?

NON          OUI

COMMUNICATION ⟍ 73

EXTRACTION
ABONNE ⟍ 74

FACTURATION ⟍ 75

FIN

CONNEXION
AU
SERVICE

ROUTAGE
VERS
N° TEL APPELE

FACTURATION
ABONNE

FIG. 4

**EP 1 059 824 B1**

## RÉFÉRENCES CITÉES DANS LA DESCRIPTION

### Documents brevets cités dans la description

- US 5818915 A, J.J. Hayes